# EUROPEAN PATENT APPLICATION

(11) **EP 2 671 629 A1**
(43) Date of publication of application: **11.12.2013**
(21) Application number: 12742623.7
(22) Date of filing: 20.01.2012
(51) Int. Cl.: B01D 71/02, B01D 69/08

(54) **MEMBRANE-FORMING DOPE FOR CARBON MEMBRANES AND PROCESS FOR PRODUCING CARBON HOLLOW FIBER MEMBRANE USING SAME**

(30) Priority: 02.02.2011 JP 2011020520
(71) Applicant: NOK Corporation, Tokyo 105-8585 (JP)
(72) Inventor: IKAWA Yusuke, Kikugawa-shi Shizuoka 437-1507 (JP); KODA, Yutaka, Kikugawa-shi Shizuoka 437-1507 (JP); YAMAMOTO, Hirokazu, Kikugawa-shi Shizuoka 437- 1507 (JP)
(74) Representative: Albrecht, Thomas
(86) International application number: PCT/JP2012/051197
(87) International publication number: WO 2012/105335

(57) **Abstract**

A membrane-forming dope solution for carbon membranes, comprising a polyphenyleneoxide polymer, ammonium nitrate, and a solvent having a boiling point of 100°C or more and being capable of dissolving these components; the membrane-forming dope solution having a concentration of the polyphenyleneoxide polymer of 20 to 40 wt.%, and a concentration of the ammonium nitrate of 1 to 10 wt.%. The membrane-forming dope solution for carbon membranes is subjected to vacuum defoaming, and then subjected to a spinning step, thereby producing a carbon hollow fiber membrane. The use of the membrane-forming dope solution for carbon membranes can reduce yarn breakage during spinning or the formation of pinhole defects in the resulting polymer hollow fiber membranes.

## Description

### TECHNICAL FIELD

The present invention relates to a membrane-forming dope solution for carbon membranes and a method for producing carbon hollow fiber membranes using the same. More particularly, the present invention relates to a membrane-forming dope solution for carbon membranes allowing mass and fast production of carbon hollow fiber membranes and having excellent moldability, and a method for producing carbon hollow fiber membranes using the membrane-forming dope solution.

### BACKGROUND ART

Conventionally, various organic membranes and inorganic membranes have been proposed as separation membranes. However, organic membranes have low solvent resistance and low heat resistance, although they are inexpensive and excellent in moldability. As opposed to organic membranes, ceramics membranes and other inorganic membranes are excellent in solvent resistance and heat resistance, but have problems of high cost and difficultly in molding.

Accordingly, carbon membranes have recently attracted attention because they are excellent in moldability and inexpensive in spite of being inorganic membranes. Among various inorganic membranes, carbon membranes have excellent gas separation performance, and are usable in an environment where organic membranes cannot be applied because heat resistance and chemical resistance are required. Hence, the practical use of carbon membranes is highly expected. In addition, hollow fiber membranes have excellent pressure resistance, and have a large membrane area per unit volume, allowing the production of compact separation membrane modules.

Carbon hollow fiber membranes with these features have already been developed. Patent Document 1 discloses a method for producing carbon hollow fiber membranes from a polyphenyleneoxide derivative, and Patent Document 2 discloses a method for producing carbon hollow fiber membranes from a sulfonated polyphenyleneoxide derivative.

These producing methods could be considered as basic methods for producing carbon hollow fiber membranes; however, pinholes are frequently observed in the resulting carbon hollow fiber membranes. There is thus a demand for a solution to address this problem.

Conventionally, in the producing process of cellulose hollow fiber membranes, etc., in order to avoid yarn breakage during spinning or pinhole defects in the resulting membranes caused by air mixed into the membrane-forming dope solution, the air is removed from the membrane-forming dope solution by vacuum defoaming during the preparation of the membrane-forming dope solution (see Patent Document 3).

Accordingly, it seems possible to suppress the formation of pinholes by subjecting the membrane-forming dope solution to vacuum defoaming in the process of forming carbon hollow fiber membranes. However, as shown in the Examples of Patent Document 2, when vacuum defoaming is performed on a membrane-forming dope solution comprising an alcohol as a solvent, the alcohol with a low boiling point is volatilized, and the composition of the membrane-forming dope solution is consequently changed. This is not preferable for spinning. In contrast, when dimethylformamide, dimethylacetamide, or the like is used as a solvent with a high boiling point in the membrane-forming dope solution for carbon hollow fiber membranes, the above-mentioned problems caused by the use of a low-boiling-point solvent are solved; however, when water or any of various ammonium salt aqueous solutions is used as a coagulation liquid for membrane formation, many bubbles are generated during the membrane formation reaction, thereby increasing the frequency of formation of pinholes.

### PRIOR ART DOCUMENT

### PATENT DOCUMENT

Patent Document 1 : JP-A-2006-231095
Patent Document 2 : JP-A-2009-34614
Patent Document 3 : JP-A-10-216489

### OUTLINE OF THE INVENTION

### PROBLEM TO BE SOLVED BY THE INVENTION

An object of the present invention is to provide a membrane-forming dope solution for carbon membranes that can reduce yarn breakage during spinning or the formation of pinhole defects in the resulting membranes, and a method for producing carbon hollow fiber membranes using the membrane-forming dope solution.

### MEANS FOR SOLVING THE PROBLEM

The above object of the present invention can be achieved by using a membrane-forming dope solution for carbon membranes, comprising a polyphenyleneoxide polymer, ammonium nitrate, and a solvent having a boiling point of 100°C or more and being capable of dissolving these components; the membrane-forming dope solution having a concentration of the polyphenyleneoxide polymer of 20 to 40 wt.% and a concentration of the ammonium nitrate of 1 to 10 wt.%. Moreover, in a method for producing carbon hollow fiber membranes, comprising the basic steps of wet or dry-and-wet spinning, drying, and carbonization, the membrane-forming dope solution for carbon membranes is subjected to vacuum defoaming, and then subjected to the spinning step, thereby producing a carbon hollow fiber membrane. The obtained carbon hollow fiber membrane is a porous hollow fiber membrane.

### EFFECT OF THE INVENTION

According to the membrane-forming dope solution of the present invention, air in the membrane-forming dope solution can be removed by vacuum defoaming without changing the composition of the dope solution, consequently reducing yarn breakage during spinning or pinholes caused by air remaining in the membrane-forming dope solution. In addition, even when dimethylacetamide or dimethylformamide is used in the membrane-forming dope solution, the generation of bubbles during the membrane formation reaction can be suppressed, thereby reducing a defective rate of pinhole formation in the resulting membranes.

Patent Document 2 mentioned above indicates that in the wet spinning of a sulfonated polyphenyleneoxide polymer, the membrane-forming dope solution comprises a solvent, such as methanol, ethanol, tetrahydrofuran, dimethylacetamide, and N-methyl-2-pyrrolidone, and the core liquid and/or coagulation bath is a solvent that is immiscible with the sulfonated polyphenyleneoxide polymer, i.e. water or an aqueous solution of an ammonium salt, such as ammonium nitrate, ammonium chloride, or ammonium sulfate. Examples 1 to 6 of Patent Document 2 use a core liquid comprising a 15 wt.% ammonium nitrate aqueous solution. Comparative Example 2, which performs wet spinning of a sulfonated polyphenyleneoxide polymer having a sulfonation degree of 60%, uses a membrane-forming dope solution comprising a dimethylacetamide solution of 22.5 wt.% of the polymer, and a core liquid comprising a 15 wt.% ammonium nitrate aqueous solution.

In the present invention, the above-mentioned effects can be achieved by adding ammonium nitrate having a solubility of 10 wt.% or more under room temperature conditions to an aprotic polar solvent, which is used as the solvent of the membrane-forming dope solution, so that the concentration of the ammonium nitrate in the membrane-forming dope solution is 1 to 10 wt.%.

### BRIEF DESCRIPTION OF DRAWINGS

Fig. 1 shows enlarged pictures of the outer surface and cross-section of a polymer hollow fiber membrane obtained in Example 1.
Fig. 2 shows enlarged pictures of the outer surface and cross-section of a polymer hollow fiber membrane obtained in Comparative Example 1.
Fig. 3 shows an enlarged picture of the outer surface of a polymer hollow fiber membrane obtained in Comparative Example 3.

### EMBODIMENTS FOR CARRYING OUT THE INVENTION

The membrane-forming dope solution comprises a polyphenyleneoxide polymer, ammonium nitrate, and an aprotic polar solvent having a boiling point of 100°C or more as essential components.

Any known carbon-forming material (polymer) can be used as a material for producing carbon hollow fiber membranes. Preferred examples thereof include the polyphenyleneoxide polymers described in Patent Documents 1 and 2, such as polyphenyleneoxide [poly(2,6-dimethyl-1,4-phenylene ether)] or sulfonated polyphenyleneoxide with substitution of a sulfonic group -SO₃H or an ammonium sulfonic group -SO₃NH₄ for at least one of the 3- and 5-positions and with a sulfonation degree of 20 to 40%, preferably 25 to 35%. Further, a copolymer of these polymers can also be used; however, in view of the application as a carbonization material, a polyphenyleneoxide is preferably used in terms of cost, while a sulfonated polyphenyleneoxide is preferably used in terms of performance.

When a polyphenyleneoxide polymer, preferably a sulfonated polyphenyleneoxide polymer, is used as a material for producing carbon hollow fiber membranes, the concentration of the polymer dissolved in the membrane-forming dope solution is 20 to 40 wt.%, preferably 25 to 33 wt.%.

The proportion of ammonium nitrate in the membrane-forming dope solution is 1 to 10 wt.%, preferably 2 to 5 wt.%. The addition of ammonium nitrate to the membrane-forming dope solution can reduce yarn breakage during spinning or the formation of pinhole defects in the resulting membranes. When the proportion of ammonium nitrate used is less than this range, yarn breakage occurs during spinning or the formation of pinhole defects in the membranes cannot be suppressed. In contrast, when the proportion of ammonium nitrate used is greater than this range, the viscosity of the membrane-forming dope solution increases, making the discharge of the membrane-forming dope solution during spinning unstable.

Moreover, ammonium salts, such as ammonium sulfate, ammonium acetate, and ammonium chloride, other than ammonium nitrate have a solubility of 1 wt.% or less in any of dimethylformamide, dimethylacetamide, dimethylsulfoxide, and N-methyl-2-pyrrolidone, as shown in the below-mentioned Reference Example; thus, such ammonium salts cannot be added to the membrane-forming dope solution in a ratio of 1 wt.% or more. For this reason, these ammonium salts cannot be used in the present invention.

The solvent for the sulfonated polyphenyleneoxide polymer and ammonium nitrate is not particularly limited, as long as it has a boiling point of 100°C or more and can dissolve these carbon-forming materials. Preferred examples of the solvent are aprotic polar solvents having a boiling point of 150°C or more, such as dimethylformamide (boiling point: 153°C), diethylformamide (boiling point: 177°C), dimethylacetamide (boiling point: 165°C), diethylacetamide (boiling point: 185°C), dimethylsulfoxide (boiling point: 189°C), and N-methyl-2-pyrrolidone (boiling point: 202°C). Since a solvent having a boiling point of 100°C or more is not volatilized after passing through a step of removing air mixed in the membrane-forming dope solution by vacuum defoaming, the composition of the membrane-forming dope solution does not change after the vacuum defoaming step. The vacuum defoaming is performed using a vacuum pump.

The prepared membrane-forming dope solution may be formed into a flat membrane, but is preferably formed into a hollow fiber membrane. When formed into a hollow fiber membrane, the membrane-forming dope solution is subjected to vacuum defoaming, and then extruded by wet spinning or dry-and-wet spinning into a coagulation bath from the outer tube of a hollow fiber spinning nozzle having a circular double-tube structure directly or through free running. If necessary, a core liquid, which is immiscible with the solvent and polymer of the membrane-forming dope solution, is simultaneously extruded from the inner tube of the spinning nozzle. Thus, a polymer hollow fiber membrane is formed. The core liquid and coagulation bath used herein are solvents that are miscible with the solvent of the membrane-forming dope solution, but immiscible with the polymer. For example, for the aforementioned polyphenyleneoxide polymer, water or an aqueous solution of an ammonium salt, such as ammonium chloride or ammonium sulfate, other than ammonium nitrate is used. In this case, the temperatures of the core liquid and coagulation bath are generally -20 to 60°C, preferably 0 to 30°C.

The obtained polymer hollow fiber membrane is optionally washed with water, and then dried to remove moisture from the polymer portion of the hollow fiber-like product. The drying conditions are not particularly limited, as long as the polymer hollow fiber membrane is completely dried; however, drying is generally performed at 20 to 80°C, preferably 25 to 35°C, for about 0.5 to 4 hours.

The dried polymer hollow fiber membrane may be directly subjected to carbonization treatment, but is preferably subjected to infusible treatment before the carbonization treatment. The infusible treatment is conducted by heating the polymer hollow fiber membrane at a temperature of about 150 to 300°C, which is lower than the carbonization temperature, for 0.5 to 4 hours. The infusible treatment results in an improvement particularly in the performance as a carbon hollow fiber membrane.

The carbonization treatment can be carried out by a known method. For example, a precursor polymer hollow fiber membrane is placed in a container, and heated at a reduced pressure of 10⁻⁴ atm or less (about 10 Pa or less) or in an atmosphere replaced with an inert gas, such as helium, argon, or nitrogen. The heating conditions, which vary depending on, for example, the type and amount of material that forms the precursor polymer, generally include a temperature of about 450 to 850°C and a time of about 0.5 to 4 hours at a reduced pressure of 10⁻⁴ atm or less (about 10 Pa or less) or in an inert gas atmosphere as mentioned above.

### EXAMPLES

The following describes the present invention with reference to Examples.

### Reference Example

Ammonium nitrate, ammonium sulfate, ammonium acetate, or ammonium chloride was dissolved in each of dimethylformamide, dimethylacetamide, dimethylsulfoxide, and N-methyl-2-pyrrolidone. The ammonium nitrate showed a solubility of 10 wt.% or more in any of the solvents, while the ammonium sulfate, ammonium acetate, and ammonium chloride showed a solubility of 1 wt.% or less in any of the solvents.

### Example 1

Ammonium nitrate (10 g) was dissolved in 154 g of dimethylformamide. To the resulting solution, 60 g of a sulfonated poly(2,6-dimethyl-1,4-phenylene ether) (sulfonation degree: 30%) was further added and dissolved, thereby preparing a membrane-forming dope solution comprising a dimethylformamide solution of a sulfonated poly(2,6-dimethyl-1,4-phenylene ether) with a concentration of 26.8 wt.%.

The prepared membrane-forming dope solution was subjected to vacuum defoaming using a vacuum pump. Then, using a spinning nozzle having a double-tube structure, the membrane-forming dope solution and water, which was used as a core liquid, were simultaneously extruded into water by a wet-spinning method, followed by air-drying at room temperature, thereby yielding a polymer hollow fiber membrane (a precursor polymer hollow fiber membrane).

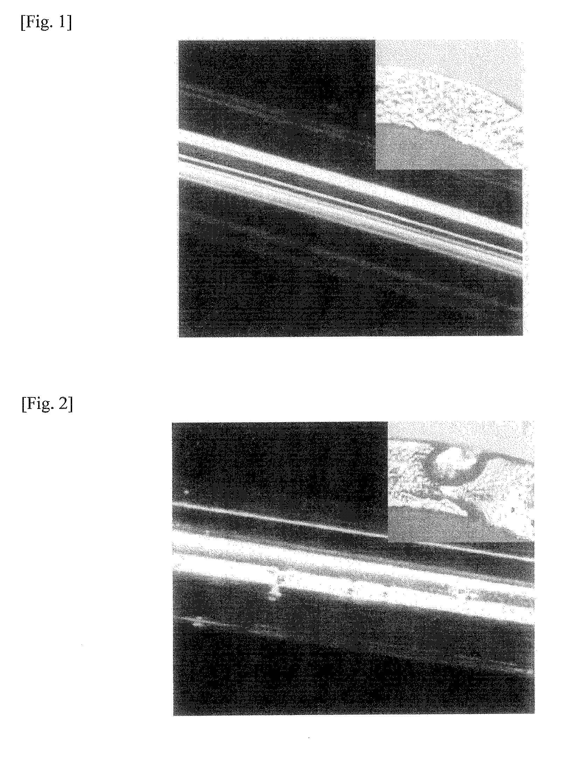

When nitrogen gas at 0.2 MPa was applied to the obtained polymer hollow fiber membrane from the inside of the membrane, pinholes were observed (1 pinhole per 50 m of the hollow fiber membrane). Fig. 1 shows enlarged pictures of the outer surface and cross-section of the obtained polymer hollow fiber membrane.

The obtained precursor polymer hollow fiber membrane was subjected to infusible treatment at 290°C for 2 hours, and then to carbonization treatment in a nitrogen atmosphere at 600°C for 2 hours, thereby yielding a porous carbon hollow fiber membrane.

### Example 2

In Example 1, the amount of ammonium nitrate was changed to 5 g (concentration: 2.3 wt.%) to prepare a membrane-forming dope solution comprising a dimethylformamide solution of a sulfonated poly(2,6-dimethyl-1,4-phenylene ether) with a concentration of 27.4 wt.%, resulting in a polymer hollow fiber membrane (a precursor polymer hollow fiber membrane).

When nitrogen gas at 0.2 MPa was applied to the obtained polymer hollow fiber membrane from the inside of the membrane, pinholes were observed (1 pinhole per 50 m of the hollow fiber membrane). The outer surface and cross-section of the polymer hollow fiber membrane were similar to those of Example 1 shown in Fig. 1. In addition, a porous carbon hollow fiber membrane was produced in the same manner as in Example 1.

### Comparative Example 1

A sulfonated poly(2,6-dimethyl-1,4-phenylene ether) (60 g; sulfonation degree: 30%) was dissolved in 154 g of dimethylacetamide to prepare a membrane-forming dope solution comprising a dimethylacetamide solution of a sulfonated poly(2,6-dimethyl-1,4-phenylene ether) with a concentration of 28.0 wt.%. The prepared membrane-forming dope solution was subjected to vacuum defoaming. Using the membrane-forming dope solution, a polymer hollow fiber membrane (a precursor polymer hollow fiber membrane) was obtained in the same manner as in Example 1, except that a 20% ammonium nitrate aqueous solution was used as the core liquid.

When nitrogen gas at 0.2 MPa was applied to the obtained polymer hollow fiber membrane from the inside of the membrane, pinholes were observed (70 pinholes per 50 m of the hollow fiber membrane). Fig. 2 shows enlarged pictures of the outer surface and cross-section of the polymer hollow fiber membrane.

### Comparative Example 2

In Comparative Example 1, the same amount of a sulfonated poly(2,6-dimethyl-1, 4-phenylene ether) having a sulfonation degree of 20% was used to prepare a membrane-forming dope solution comprising a dimethylacetamide solution of a sulfonated poly(2,6-dimethyl-1,4-phenylene ether) with a concentration of 28.0 wt.%. The membrane-forming dope solution was subjected to vacuum defoaming, and water was used as the core liquid in place of the ammonium nitrate aqueous solution, thereby yielding a polymer hollow fiber membrane (a precursor polymer hollow fiber membrane).

When nitrogen gas at 0.2 MPa was applied to the obtained polymer hollow fiber membrane from the inside of the membrane, pinholes were observed (30 pinholes per 50 m of the hollow fiber membrane). The outer surface and cross-section of the hollow fiber membrane were similar to those of Comparative Example 1 shown in Fig. 1.

### Comparative Example 3

In Comparative Example 1, the amount of dimethylacetamide was changed to 77 g, and 77 g of methanol was further used to prepare a membrane-forming dope solution comprising a dimethylacetamide solution of a sulfonated poly(2,6-dimethyl-1,4-phenylene ether) with a concentration of 28.0 wt.%. The prepared membrane-forming dope solution was used without vacuum defoaming, thereby yielding a polymer hollow fiber membrane (a precursor polymer hollow fiber membrane).

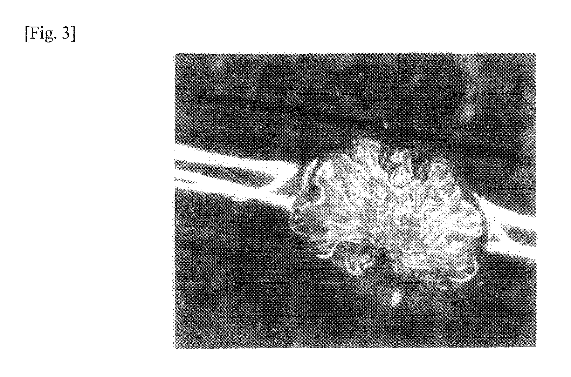

When nitrogen gas at 0.2 MPa was applied to the obtained polymer hollow fiber membrane from the inside of the membrane, pinholes were observed (30 pinholes per 50 m of the hollow fiber membrane). Fig. 3 shows an enlarged picture of the outer surface of the polymer hollow fiber membrane.

## Claims

1. A membrane-forming dope solution for carbon membranes, comprising:
a polyphenyleneoxide polymer;
ammonium nitrate; and
a solvent having a boiling point of 100°C or more and being capable of dissolving these components;
the membrane-forming dope solution having a concentration of the polyphenyleneoxide polymer of 20 to 40 wt.% and a concentration of the ammonium nitrate of 1 to 10 wt.%.

2. The membrane-forming dope solution for carbon membranes according to claim 1, wherein the polyphenyleneoxide polymer is a sulfonated polyphenyleneoxide polymer.

3. The membrane-forming dope solution for carbon membranes according to claim 2, wherein the sulfonated polyphenyleneoxide polymer is a sulfonated poly(2,6-dimethyl-1,4-phenylene ether).

4. The membrane-forming dope solution for carbon membranes according to claim 1, wherein a concentration of an ammonium sulfate in the membrane-forming dope solution is 2.5 to 5 wt.%.

5. The membrane-forming dope solution for carbon membranes according to claim 1, wherein the solvent that can dissolve the polyphenyleneoxide polymer and the ammonium nitrate is an aprotic polar solvent having a boiling point of 150°C or more.

6. The membrane-forming dope solution for carbon membranes according to claim 5, wherein the aprotic polar solvent is dimethylformamide, diethylformamide, dimethylacetamide, diethylacetamide, dimethylsulfoxide, or N-methyl-2-pyrrolidone.

7. The membrane-forming dope solution for carbon membranes according to claim 1, which is used as a membrane-forming dope solution for carbon hollow fiber membranes.

8. A method for producing carbon hollow fiber membranes, comprising the basic steps of wet or dry-and-wet spinning, drying, and carbonization, wherein the membrane-forming dope solution for carbon membranes according to claim 1 is subjected to vacuum defoaming, and then subjected to the spinning step.
